# EUROPEAN PATENT APPLICATION

(11) **EP 4 625 296 A1**
(43) Date of publication of application: **01.10.2025**
(21) Application number: 24167921.6
(22) Date of filing: 29.03.2024
(51) Int. Cl.: G06Q 30/0201, G06N 20/00

(54) **METHOD AND SYSTEM FOR GENERATING SEASONALLY ADJUSTED RESPONSES IN REAL-TIME**

(30) Priority: 27.03.2024 US 202418619004
(71) Applicant: Infosys Limited, 560100 Bangalore (IN)
(72) Inventor: WESTON-LEWIS, Sebastian, London (GB)
(74) Representative: Finnegan Europe LLP

(57) **Abstract**

The disclosure relates to a method and a system for generating seasonally adjusted responses in real time. The method includes receiving a set of parameters from a device associated with a user. The method further includes querying a first database based on the set of parameters. The first database is generated using a machine learning (ML) model. The method further includes retrieving a plurality of query fragments related to the set of parameters from the first database. The method further includes generating a seasonally adjusted response based on the plurality of query fragments and a plurality of performance metrices.

## Description

### TECHNICAL FIELD

This present disclosure relates to data processing, and more particularly to a system and a method for generating seasonally adjusted responses in real time.

### BACKGROUND

Organizations often utilize predictive analytics for making data-driven decisions and optimizing outcomes. Accurate forecasting enables organizations to adapt to changing market conditions, identify growth opportunities, and optimize their operations. To predict KPIs such as sales, revenue, growth or the like, the existing techniques examines time series data from the past to estimate the values of KPIs in the future.

Conventionally, the prediction algorithms for predicting KPIs for a time period evaluate data for the same time period in the past. For example, for predicting sales of chocolate eggs in the USA for the month of March 2024, the existing prediction models may only consider sales data from March 2023, or March 2022. However, only considering the data for March 2023, or March 2022 may not be accurate in predicting the sales in March 2024. This is because Easter falls on March 31, 2024, and in the years 2023 and 2022, it fell in April. For predicting the sales of chocolate eggs in March of 2024, merely considering sales of chocolate eggs for March 2023, and March 2022 may give incorrect predictions as Easter may have a significant impact on the sales of chocolate eggs in the USA. Thus, the existing prediction algorithms may produce inaccurate results.

### SUMMARY

As discussed above, predicting trends may utilize time series data. The existing prediction models rely on historical data from an exact same time period in the past to forecast trends in the future. For example, for predicting sales of firecrackers in India for the month of November 2024, the existing prediction models may only consider sales data from November 2023, or November 2022. However, the sales of firecrackers may depend on the number of Diwali holidays in the month. For example, the number of Diwali holidays may be less in 2024 as compared to those in November 2023. Further, there were no Diwali holidays in November 2022. For predicting the sales of firecrackers for November of 2024, merely considering sales of firecrackers for November 2023, and November 2022 may not be accurate and may give incorrect predictions. Thus, the conventional methods lack in accurately reflecting fluctuations present in real-world scenarios. For example, the conventional methods do not consider seasonal variations/cyclic trends such as holidays, festivals, global and local events, etc. for predicting the future projections which may have a significant impact on the consumer behavior and thus, on sales, revenue etc.

Moreover, weightage assigned to all days, weeks, and months being the same may lead to inaccuracies in the future projections. Further, the conventional methods require manual intervention for data manipulation and analysis, due to which they are often cost-intensive.

The present invention is directed to overcome at least some of the shortcomings of the conventional prediction systems. The methods and systems described herein consider seasonal variations such as global events, locale-specific events, locale-specific demographic data, and locale-specific trajectory changes for predicting data. This increases the accuracy of the predicted results. A machine learning (ML) model is trained using historical data such as data from a plurality of calendars, significant global events, locale-specific events, locale-specific demographic data, and locale-specific trajectory changes to generate a synthetic calendar database. Further, the ML model may periodically update the synthetic calendar database. Thus, the synthetic calendar is not merely a calendar with months and days, but also comprise seasonal aspects such as notable events, holidays, etc. which may be global or specific to a given locale. Once the synthetic calendar is generated, it may be utilized to generate multiple queries and their associated performance metrics. Each query comprises a time period. Each performance metric may comprise a weightage percentage and a trajectory percentage corresponding to the time period in each query.

A weightage percentage may signify the weightage given to the time period in each query based on one or more factors such as recency and similarity of time periods. A trajectory percentage may be used as a normalization factor for the data corresponding to the query to consider the variations in inflation, changes in demography and the like. The generated queries are formed considering seasonality aspect of the time-series data. The multiple queries may be used to query data from other databases comprising historical data. The data obtained by querying the other databases may be adjusted using the weightage percentage and trajectory percentage corresponding to the multiple queries. The trajectory percentage may normalize the data to consider changing factors over time such as demographic changes, population changes, inflation etc. The adjusted data may be aggregated to generate a final prediction.

In one embodiment, a method for generating seasonally adjusted responses in real time is disclosed. In one example, the method may include receiving a set of parameters from a device associated with a user. The method may further include querying a first database based on the set of parameters. The first database may be generated using a machine learning (ML) model. The method may further include retrieving a plurality of query fragments related to the set of parameters and a plurality of performance metrics, from the first database. The method may further include generating a seasonally adjusted response based on the plurality of query fragments and the plurality of performance metrices.

In another embodiment, a system for generating seasonally adjusted responses in real time is disclosed. In one example, the system may include a processor and a memory communicatively coupled to the processor. The memory may store processor-executable instructions, which, on execution, may cause the processor to receive a set of parameters from a device associated with a user. The processor-executable instructions, on execution, may further cause the processor to query a first database based on the set of parameters. The first database may be generated using a machine learning (ML) model. The processor-executable instructions, on execution, may further cause the processor to retrieve a plurality of query fragments related to the set of parameters and a plurality of performance metrices, from the first database. The processor-executable instructions, on execution, may further cause the processor to generate a seasonally adjusted response based on the plurality of query fragments and the plurality of performance metrices.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** illustrates a block diagram of an environment for generating seasonally adjusted responses in real time, in accordance with an exemplary embodiment of the present disclosure.
**FIG. 2** illustrates a block diagram of various engines within a memory of a server configured for generating seasonally adjusted responses in real time, in accordance with some embodiments of the present disclosure.
**FIG. 3** illustrates a flow diagram of an exemplary method for generating seasonally adjusted responses in real time, in accordance with some embodiments of the present disclosure.
**FIG. 4** illustrates a detailed flow diagram of a method for generating seasonally adjusted responses in real time, in accordance with some embodiments of the present disclosure.
**FIG. 5** illustrates a flow diagram of an exemplary method for extracting parameters from an input, in accordance with some embodiments of the present disclosure.
**FIG. 6** illustrates an example scenario of generating seasonally adjusted responses in real time, in accordance with some embodiments of the present disclosure.
**FIG. 7** illustrates a control logic for generating seasonally adjusted responses in real time, in accordance with some embodiments of the present disclosure.
**FIG. 8** illustrates a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims. Additional illustrative embodiments are listed below.

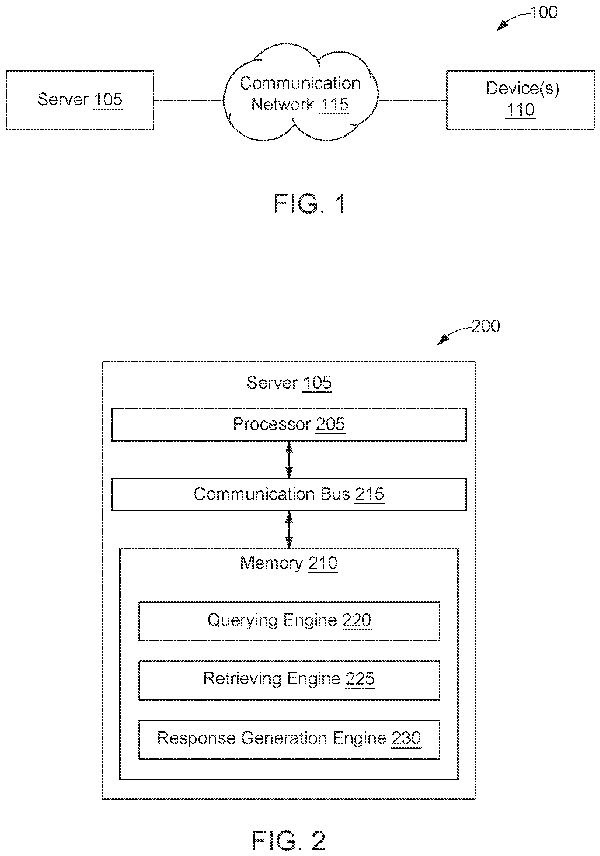

**FIG. 1** is a block diagram that illustrates an environment 100 for generating seasonally adjusted responses in real time, in accordance with an exemplary embodiment of the present disclosure. The environment 100 represents a system or a framework that generates responses which are adjusted for seasonal variations in real-time. The system may adjust data to account for seasonal variations. The term "seasonal variations" may refer to recurring fluctuations or patterns that follow a regular cycle over specific periods of time, such as business cycle or consumption cycles. The seasonal variations may encompass various aspects including temporal patterns, cyclical trends, and the like. In other words, the seasonal variation may be defined as a fluctuation or a pattern that occurs in a particular data series over a course of a year due to factors such as, holidays, cultural events, and the like. Seasonal adjustment considers effects of the seasonal variations (e.g., fluctuations that occur during specific times of year) from the data. For example, in case of a sales-related query, a seasonally adjusted response may be generated after accounting for the seasonal variations in sales trends. To generate the seasonally adjusted responses, the environment 100 may include a server 105, and a plurality of device(s) 110. Each of the plurality of device(s) 110 may be associated with a user. The user may be an administrator.

The server 105 and the plurality of device(s) 110 are configured to communicate with each other via a communication network 115 for sending and receiving various data. Examples of the communication network 115 may include, but are not limited to, a wireless fidelity (Wi-Fi) network, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, and a combination thereof.

Examples of the plurality of device(s) 110 may include, but are not limited to a smartphone, an application server, a laptop, a desktop, a mobile phone, a smart wearable, or any other computing device. In some embodiments, the plurality of device(s) 110 are referred to as devices associated with users. Each of the plurality of device(s) 110 may include a display which further includes a user interface (not shown in FIG. 1). By way of an example, the display may be used to display data (for example, a seasonally adjusted response to a query, a notification such as user intervention/feedback required, and the like), to the user. By way of an example, the query may be related to key performance indicators like sales, revenues, margins, attendance, conversions, or any other time-series data that may exhibit seasonal variations. In some embodiments, the user may interact with the server 105 using the user interface via the communication network 115. By way of an example, the user may use the user interface of the display to provide inputs (for example, the query, the feedback, and the like) to the server 105. The user may input the feedback to train a Machine Learning (ML) model within or associated with a memory (not shown in FIG. 1) of the server 105.

The server 105 may be configured for generating the seasonally adjusted responses to an input from a user in real time. Examples of the server 105 may include, but are not limited to, an application server, a web server, a database server, a laptop, a desktop, a mobile phone, a smart wearable. In some embodiments, the server 105 may receive the input (for example, the query) from at least one of the plurality of device(s) 110 associated with the user. Further, for generating the seasonally adjusted responses, the server 105 may perform various operations. For example, the operations may include receiving inputs, querying databases, retrieving query fragments, generating data fragments, and the like. Moreover, functionalities of the server 105 are further explained in detail in conjunction with FIG. 2.

**FIG. 2** is a block diagram of various engines within the memory of the server 105 configured for generating seasonally adjusted responses in real time, in accordance with an exemplary embodiment of the present disclosure. FIG. 2 is explained in conjunction with FIG. 1. The server 105 may include a processor 205, and a memory 210 communicatively coupled to the processor 205 via a communication bus 215. The memory 210 may store various data that may be captured, processed, and/or required by the server 105. The memory 210 may be a non-volatile memory (e.g., flash memory, Read Only Memory (ROM), Programmable ROM (PROM), Erasable PROM (EPROM), Electrically EPROM (EEPROM) memory, etc.) or a volatile memory (e.g., Dynamic Random Access Memory (DRAM), Static Random-Access memory (SRAM), etc.)

The memory 210 may also store processor-executable instructions. The processor-executable instructions, when executed by the processor 205, may cause the processor 205 to implement one or more embodiments of the present disclosure such as, but not limited to, receiving input, querying databases, retrieving query fragments, generating data fragments, processing the data fragments, and generating response and the like. The memory 210 may include a querying engine 220, a retrieving engine 225, and a response generation engine 230. The memory 210 may also include one or more data stores (not shown in FIG. 2) for storing data and intermediate results generated by the engines 220-230. It should be noted that the engines 220-230 in conjunction with the processor 205 may perform various operations to generate seasonally adjusted responses.

In some embodiments, the memory 210 may include a pre-processing engine (not shown in FIG. 2) that may perform its operations in conjunction with the processor 205. The pre-processing engine may receive an input from a device (for example, a device from the plurality of device(s) 110) associated with a user. The term "input" referred in the disclosure may correspond to a request for projecting value of a metric. By way of an example, the input may be "What will be the sales revenue for product A in May 2024 in UK?". Further, the pre-processing engine may pre-process the input using a Natural Language Processing (NLP) model. The input may be pre-processed through the NLP to decode an underlying meaning of the input.

Thereafter, the pre-processing engine may extract a set of parameters from the input. The set of parameters may include a timeframe, a locale, and a dimension associated with the input received from the device associated with the user. The timeframe may specify a time period mentioned in the input. For example, the timeframe may indicate a specific date range, a duration (such as "May 2024"), or a point in time. The locale may indicate a geographic location. For example, the locale may be a city, a region, a country, or any other geographical reference point. In the above example, the locale is "UK." The dimension may be related to specific topics or categories, depending on the nature of the input and user's intent. The dimension may be the scope of the query. For example, the dimension in the above-stated example may be "sales revenue for product A." Other examples of dimension may be, revenues, margins, attendance in an organization, conversions, CPU utilization, and the like.

Alternatively, in one embodiment, the user may provide the input to a device of the plurality of device(s) 110 and a processor of the device may perform the operations, such as receiving the input, optionally, pre-processing the input, and extracting the set of parameters. Further, in one embodiment, a first device of the plurality of device(s) 110 may receive the input that may be sent to a second device of the plurality of device(s) 110. Further, a processor of the second device may pre-process the input and extract the set of parameters. The pre-processing engine of the memory 210 may be communicatively coupled to the querying engine 220. In some embodiments of the present disclosure, the user may provide a set of parameters to the querying engine 220.

In one embodiment, the querying engine 220 may receive the set of parameters. By way of an example, when a user provides a query as "What will be the sales revenue for product A in May 2024 in UK?" through the device, the set of parameters received by the querying engine 220 may be "May 2024" (timeframe), "UK" (locale), and "sales revenue for Product A" (dimension).

The set of parameters may be received from the device (for example from a device of the plurality of device(s) 110) associated with the user. The device may include, but is not limited to, a smartphone, an application server, a laptop, a desktop, a mobile phone, a smart wearable, or any other computing device. Further, in one embodiment, in response to receiving the set of parameters, the querying engine 220 may query a first database based on the set of parameters. The first database may correspond to a synthetic calendar database. In some embodiments, the synthetic calendar database may be a digital database that simulates or represents time-related information. The synthetic calendar database may be generated artificially or programmatically to provide structured time-related information by a machine learning (ML) model. Further, the machine learning model may regularly update the synthetic calendar database.

Further, the first database may be stored within the memory 205. The first database may be generated and updated by the ML model based on a plurality of calendars, global events, locale-specific events, locale-specific demographic data, and locale-specific trajectory changes. The plurality of calendars may be referred to different calendar systems or sources of calendar data. This may include several types of calendars such as Gregorian, Islamic, Lunar, Hebrew, Chinese, or any other calendar system used globally or locally. It should be noted that dimensions of the plurality of calendars may correspond to a plurality of calendar structures used to organize time and measure time. The global events may correspond to events of significance that occur worldwide, such as holidays like New Year's Day, Christmas, Diwali, global secular events such as International women's day, global sporting events such as FIFA world cup, Olympics, and Cricket world cup, and the like. The locale-specific events may correspond to events that are specific to a particular geographic location or locale. These events may include local holidays, festivals, or cultural events that are unique to a certain region.

The locale-specific events may include, but are not limited to, locale-specific payroll data, locale-specific school calendar, locale-specific weather patterns, political events such as elections and transitions, locale-specific holidays such as Independence Day, Black Friday, and locale-specific social, cultural, and religious events. Further, the locale-specific demographic data may correspond to information about population characteristics of a particular geographic area. This may include data on age, gender, income level, education, etc., specific to a given locale. The locale-specific trajectory changes may refer to changes or trends that occur over time within a specific geographic area. This may include changes in population growth, socio-economic development, or any other relevant trajectory specific to the locale. Since the synthetic calendar database or the first database comprises the locale-specific data, global data, plurality of local and global calendars etc., the first database considers the seasonal variations.

The first database may be updated dynamically by a processor using an ML model. Dynamically updating the first database using the ML model may refer to continuously and automatically adjusting its content or structure based on feedback, new data, and insights. This process may occur in real-time or near real-time, allowing the first database to adapt and evolve in response to changing conditions, or other relevant factors. For generating the first database, the ML model may be trained using an autoencoding technique, a Recurrent Neural Network (RNN) technique, or deep learning techniques.

The querying engine 220 may be communicatively coupled to the retrieving engine 225. In one embodiment, querying engine 220 may provide the set of parameters to the retrieving engine 225. The retrieving engine 225 in conjunction with the processor 205 may retrieve a plurality of query fragments related to the set of parameters. The plurality of query fragments may be retrieved from the first database. Each query fragment may include a timeframe. The timeframes may be generated by the ML model considering seasonal variations. This is explained in detail below.

For example, in January 2024, the user may want to know the projected sales revenue for a product A in March 2024 in the United Kingdom. The timeframe is March 2024. March 2024 includes Easter (a holiday and a festival) at the end of the month, i.e., on March 31, 2024. Further, the payday for March falls on March 29, 2024. The March of 2024 is different than the March of 2023 (no Easter in March 2023 and payday in March 2023 was on 31^{st} March). Further, the number of weekends in a given month may also vary every year, which may impact the sales of the product. Therefore, merely considering the sales revenue data for March 2023 may not provide accurate projected sales revenue data for March 2024 because the sales variations due to Easter 2023, varying payday, and/or number of weekends will not be considered during the projections for 2024 by the existing prediction algorithms.

The ML model may generate different query fragments to consider that Easter falls in March 2024 and the payday falls on March 29, 2024, as the sales revenue for the product A may be higher during the holidays and on or after the payday. The query fragments generated by querying the synthetic calendar may be time periods relevant for the calculation. For example, the query fragments may be -
1. 4 weeks leading to Easter 2023
2. 4 weeks leading to Easter 2022
3. Last 10 days before Easter 2023
4. Last 10 days Easter 2022
5. Last 10 days before Easter 2021
6. Last week of February 2024
7. Last week of January 2024
8. Last week of November 2023

In addition to retrieving the query fragments, the retrieving engine may also retrieve from the synthetic calendar database, performance metrices for each query fragment. The performance metrices for each query fragment may be a weightage percentage and a trajectory percentage for each query fragment. The trajectory percentage may a prediction of a pattern of change in a time frame. For example, the trajectory percentage may be an adjustment or normalization required to the data corresponding to past due to factors like inflation, deflation, changing demography etc. The trajectory percentage may be predicted by the ML model by performing mathematical calculations on time series data. In some embodiments, the trajectory percentage may be calculated using techniques such as linear regression, moving average, exponential smoothing, etc. The ML model may be further trained to generate the trajectory percentages based on information from databases such as reports from governmental organizations, private organizations, etc. For example, the demographic changes may be considered by training the ML model using historical demographic data obtained from sources such as governmental organizations or private organizations. Similarly, inflation variations may be considered by training the ML model using historical statistical data from inflation reports from government or private organizations. The historical database may comprise structured or unstructured data in variety of digital forms such as data series, data tables, charts, pivot tables and the like.

The weightage percentage may be indicative of the importance given to a time period specified in the query fragment. The ML model may use techniques like pattern matching to generate the weightage percentage for each time period. For example, weightage may be calculated based on recency of a time period. A query fragment corresponding to a recent time period may be given higher weightage than the query fragment corresponding to a later time period. In the example above, the query fragment "4 weeks leading to Easter 2023" may be given higher weightage than "4 weeks leading to Easter 2022". In another example, the weightage may be calculated based on similarity of the time period in the query fragment and the timeframe specified in the set of parameters.

Each query fragment may be associated with a unique weightage percentage and a unique trajectory percentage. For the above example, Table 1 shows the unique weightage and trajectory percentages for each query fragment.

In one embodiment, the querying engine 220 may query a second database after querying the first database using the plurality of query fragments. The second database may correspond to a database storing historical data for the dimension comprised in the set of parameters. For example, if the user wants to know profit projections for an organization, then the second database may be a database storing the historical profit data of the organization.

In some embodiments, the second database may be a system of record (SOR) database. The second database may be a central repository that may function as a source of data. The second database may store information such as sales data, revenue data, salary data, and the like. Further, in some embodiments, the second database may store information essential for business operations. The second database may be used for maintaining historical records, and other essential information necessary for regulatory compliance and decision-making. The second database may be located in another server that may be in communication with the server 105 via a communication network (such as the communication network 115).

The second database may be queried using the plurality of query fragments. Referring to the example above, the SOR database may be queried to determine the sales revenue for the product A using the plurality of query fragments retrieved from the synthetic calendar database.

In response to querying the second database, the response generation engine 230 may generate a plurality of data fragments for the locale and the dimension. Each data fragment may represent a response to the corresponding query fragment for the locale and the dimension. The data fragment may be data such as sales data, customer information, product data, salary data, etc. Referring to the above example, each data fragment may be the sales revenue for product A in the UK in the time frame in the corresponding query fragment. The plurality of data fragments retrieved from the second database may be as shown in Table 1.

**Table 1**

| Query Fragments | Weightage percentage | Trajectory percentage | Data fragments | Processed data fragments |
|---|---|---|---|---|
| 4 weeks leading to Easter 2023 | W1 | T1 | D1 | P1 |
| 4 weeks leading to Easter 2022 | W2 | T2 | D2 | P2 |
| Last 10 days before Easter 2023 | W3 | T3 | D3 | P3 |
| Last 10 days Easter 2022 | W4 | T4 | D4 | P4 |
| Last 10 days before Easter 2021 | W5 | T5 | D5 | P5 |
| Last week of February 2024 | W6 | T6 | D6 | P6 |
| Last week of January 2024 | W7 | T7 | D7 | P7 |
| Last week of November 2023 | W8 | T8 | D8 | P8 |

Further, each of the plurality of data fragments may be processed individually. Each of the plurality of data fragments may be processed based on a weightage percentage and a trajectory percentage. In some embodiments, each of the plurality of data fragments may undergo mathematical transformations to consider a weightage percentage and a trajectory percentage.

In some embodiments, the response generation engine may apply a trajectory percentage (for example, T1) of the plurality of trajectory percentages (for example, T1-T8) to a corresponding data fragment (for example, D1) to generate a processed data fragment (for example, P1). This may be performed for each of the plurality of data fragments. The trajectory percentage may be an adjustment or normalization required to the data corresponding to past due to factors like inflation, deflation, changing demography etc. The weightage percentage may be indicative of the importance given to time period specified in the query fragment. In some embodiments, the response generation engine may apply a weightage percentage (for example, W1) from the plurality of weightage percentages (for example, W1-W8) to a corresponding data fragment (for example, D1) to generate a processed data fragment (for example, P1). This process may be performed for each of the plurality of data fragments. In some embodiments, both trajectory percentage (for example, T1) and weightage percentage (for example, W1) may be applied to each data fragment (for example, D1) to generate a processed data fragment (for example, P1).

Each individual data fragment may undergo a series of mathematical transformations to refine, enhance, and interpret the information included in the data fragment. Each of the plurality of data fragments, after being processed, may encapsulate information extracted from the second database, such as historical sales data for specific product during different timeframes. The response generation engine may aggregate the plurality of processed data fragments (for example, P1, P2, P3, P4, P5, P6, P7, and P8) to generate a seasonally adjusted response.

By generating the plurality of data fragments corresponding to the plurality of query fragments, the seasonal variations are considered while generating a seasonally adjusted response. Examples of a data fragment may be value of sales, revenue, customer retention rate, etc. based on data available in the second database. Thus, database corresponding to the dimension provided in the user input, requirement may be queried. For example, if the user wants to know profit projections for an organization, database storing the past profit may be queried. In this example, the second database is the database storing the historical profit data of the organization.

In some embodiments, in case of failure in querying the first database, a notification may be sent to the user on the device associated with the user. In response to sending the notification, the user may provide feedback. The feedback may be received and used to train the ML model. The ML model may further update the first database based on the feedback and training. By way of an example, when the set of parameters is insufficient for querying, an undefined output may be generated. Further, due to this lack of information, the response generation engine 230, may trigger a notification to a device associated with the user, prompting the user to provide the feedback or additional information to refine the query. The ML model may then utilize this feedback to update its understanding and improve future queries, thus reducing chances of encountering undefined outputs due to insufficient input parameters.

It should be noted that all such aforementioned engines 220 - 230 may be represented as a single module or a combination of different modules. Further, as will be appreciated by those skilled in the art, each of the engines 220 - 230 may reside, in whole or in parts, on one device or multiple devices in communication with each other. In some embodiments, each of the engines 220 - 230 may be implemented as dedicated hardware circuit comprising custom application-specific integrated circuit (ASIC) or gate arrays, off-the-shelf semiconductors such as logic chips, transistors, or other discrete components. Each of the engines 220 - 230 may also be implemented in a programmable hardware device such as a field programmable gate array (FPGA), programmable array logic, programmable logic device, and so forth. Alternatively, each of the engines 220 - 230 may be implemented in software for execution by several types of processors (e.g., the processor 205). An identified module of executable code may, for instance, include one or more physical or logical blocks of computer instructions, which may, for instance, be organized as an object, procedure, function, or other construct. Nevertheless, the executables of an identified module or component need not be physically located together but may include disparate instructions stored in distinct locations which, when joined logically together, include the module, and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for generating seasonally adjusted responses in real time. For example, the exemplary server 105 may generate the seasonally adjusted responses by the processes discussed herein. In particular, as will be appreciated by those of ordinary skill in the art, control logic and/or automated routines for performing the techniques and steps described herein may be implemented by the server 105 either by hardware, software, or combinations of hardware and software. For example, suitable code may be accessed and executed by the one or more processors (for example, the processor 205) on the server 105 to perform some or all of the techniques described herein. Similarly, application specific integrated circuits (ASICs) configured to perform some, or all of the processes described herein may be included in the one or more processors on the server 105.

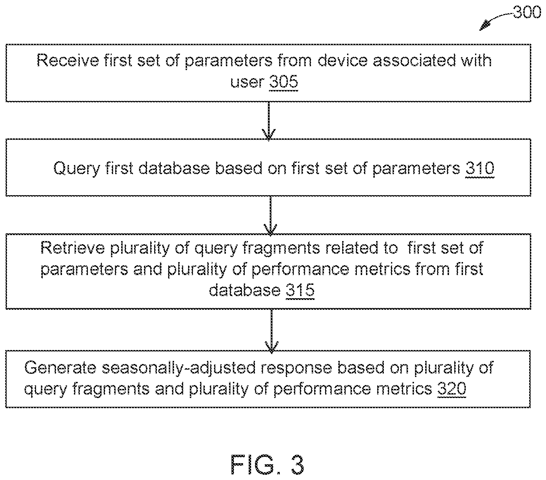

**FIG. 3** is a flow diagram that depicts an exemplary method 300 for generating seasonally adjusted responses in real time, in accordance with an exemplary embodiment of the present disclosure. Each step of the flowchart may be executed by a server (such as the server 105). FIG. 3 is explained in conjunction with FIGs. 1-2.

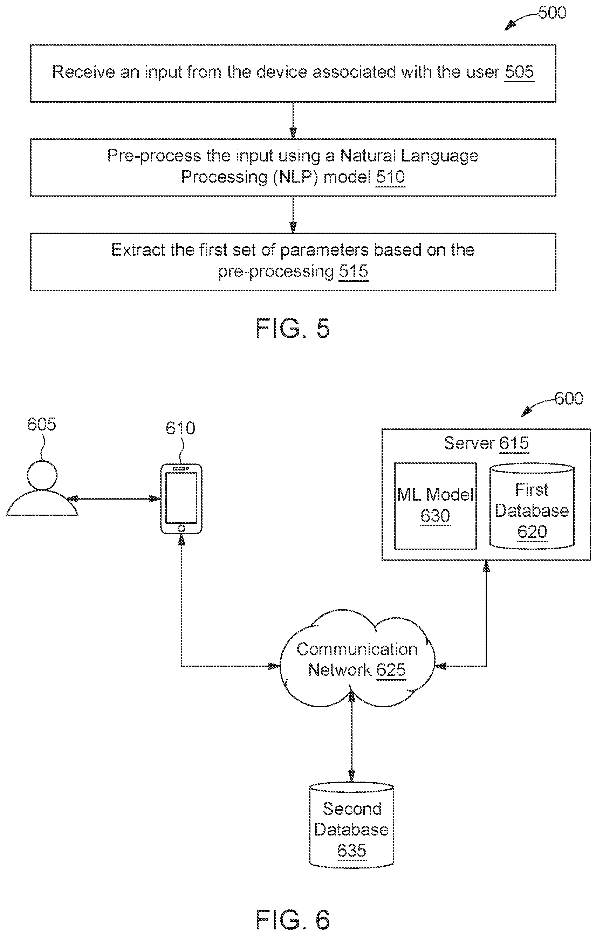

At step 305, a set of parameters may be received from a device (for example, a device of the plurality of device(s) 110) associated with a user. The set of parameters may include a timeframe, a locale, and a dimension associated with the input received from the device associated with the user. The timeframe may specify a time period relevant to the input. For example, the timeframe may indicate a specific date range, a duration (such as "three weeks leading to Easter 2024", "next week", and the like), or a point in time (such as "tomorrow"). The locale may indicate a geographic location (such as "UK," "France," "Asia" etc.). The dimension may be the scope of the query, such as sales data for a product, salary data for an organization and the like. For example, the dimensions may be "sales volume for XYZ product." In some embodiments, the set of parameters may be extracted from a user input. Extraction of the set of parameters from a user input is further explained in detail in conjunction with FIG. 5.

Further, at step 310, a first database may be queried based on the set of parameters. This step may be performed using a querying engine (such as the querying engine 220). The first database may correspond to a synthetic calendar database. The synthetic calendar database may be a digital database that simulates or represents time-related information. The synthetic calendar database may be generated artificially or programmatically to provide structured time-related information. The first database may be generated based on a plurality of calendars, global events, locale-specific events, locale-specific demographic data, and locale-specific trajectory changes. The plurality of calendars may be referred to different calendar systems or sources of calendar data. This may include distinct types of calendars such as Gregorian, Islamic, Lunar, Hebrew, Chinese, or any other calendar system used globally or locally.

It should be noted that dimensions of the plurality of calendars may correspond to a plurality of calendar structures used to organize time and measure time. The global events may correspond to events of significance that occur worldwide, such as holidays like New Year's Day, Christmas, Diwali, Eid, Lunar New Year, Easter, and the like. The locale-specific events may correspond to events that are specific to a particular geographic location or a locale. These events may include local holidays, festivals, or cultural events that are unique to a certain region. The locale-specific events may include, but are not limited to, locale-specific payroll data (for example, information related to salaries, wages, and employment trends specific to a particular region or locale), locale-specific school calendar (i.e., academic calendar specific to educational institutions within a given locale, including information on school holidays, breaks, exam schedules, etc.), locale-specific weather patterns (i.e., weather data specific to a particular geographic area, including typical weather patterns, seasonal variations, and climate trends), political events such as elections and transitions, holidays such as Independence day, Black Friday, and locale-specific social, cultural, and religious events (for example, festivals, ceremonies, or observances that hold cultural or religious importance for the local community).

Further, the locale-specific demographic data may correspond to information about population characteristics of a particular geographic area. This may include data on age, gender, income level, education, etc., specific to a given locale. The locale-specific trajectory changes may refer to changes or trends that occur over time within a specific geographic area. This may include changes in population growth, economic development, infrastructure, or any other relevant trajectory specific to the locale. The first database may be generated using an ML model.

At step 315, a plurality of query fragments related to the set of parameters may be retrieved by a retrieving engine (same as the retrieving engine 225). The plurality of query fragments may be retrieved from the first database. As explained above, each query fragment of the plurality of query fragments may include a timeframe. In addition, to the retrieving the plurality of query fragments, the retrieving engine may retrieve performance metrices for each query fragment.

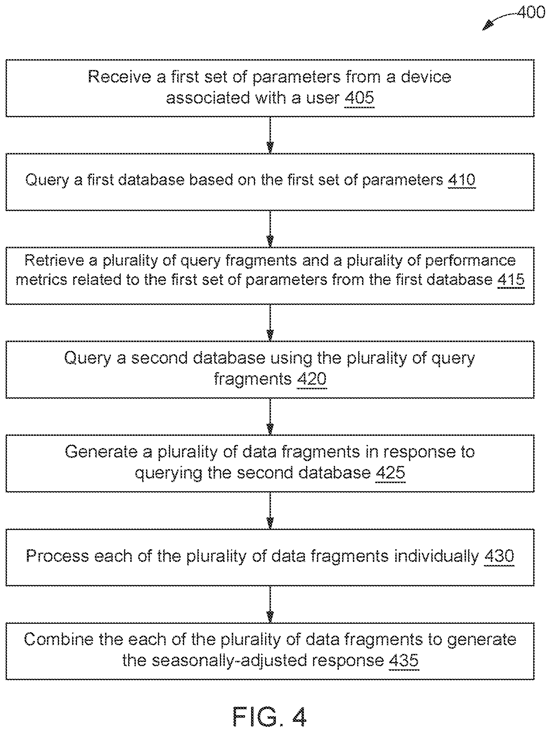

Thereafter, at step 320, a seasonally adjusted response may be generated based on the plurality of query fragments and a plurality of performance metrices using a response generation engine (such as the response generation engine 230). The plurality of performance metrices may include a plurality of trajectory percentages and a plurality of weightage percentages. The plurality of weightage percentages may be indicative of growth trends and significance of events. The plurality of trajectory percentage may be indicative of a prediction of a pattern of change in a timeframe. The detailed process of generating a seasonally adjusted response using the plurality of query fragments is explained in detail below in relation to FIG. 4.

**FIG. 4** is a detailed flow diagram that depicts a method 400 of generating seasonally adjusted responses in real time, in accordance with an exemplary embodiment of the present disclosure. FIG. 4 is explained in conjunction with FIGs 1-3. Each step of the flowchart is executed by a server (such as the server 105).

At step 405, a set of parameters may be received from a device associated with a user. At step 410, a first database may be queried based on the set of parameters. At step 415, a plurality of query fragments related to the set of parameters may be retrieved from the first database. Steps 405-415 correspond to steps 305-315 of FIG. 3, with a detailed explanation provided above.

Once the plurality of query fragments is retrieved, a second database may be queried using the plurality of query fragments, at step 420. This step may be performed using a querying engine (same as the querying engine 220). The second database may correspond to a system of record (SOR) database. The second database may be queried using the plurality of query fragments.

Further, at step 425, in response to querying the second database using the plurality of query fragments, a plurality of data fragments may be generated using a response generation engine (same as the response generation engine 230). Each data fragment of the plurality of data fragments may include a response to the corresponding query fragment of the plurality of query fragments used to query the second database. By way of an example, a data fragment may be sales data for a time period and for the locale specified in the query fragment. The response in each data fragment queried from the second database may refer to specific information retrieved from the second database in response to a query fragment. The data fragment may be data such as sales data, customer information, product data, salary data, etc.

Thereafter, at step 430, each of the plurality of data fragments may be processed individually. In other words, each individual data fragment may undergo a series of mathematical transformations to refine, enhance, and interpret the information it includes. In some embodiments, the trajectory percentage retrieved from querying the first database may be applied to a corresponding data fragment. This may be performed for each of the plurality of data fragments. The trajectory percentage may be indicative of a prediction of a pattern of change (for example, inflation, changing population, etc.) in a time frame. The trajectory percentage may be used to normalize the past data to make it equivalent to the future time period. Also, in some embodiments, a weightage percentage retrieved from the first database may be applied to a corresponding data fragment, and this may be performed for each of the plurality of data fragments. The weightage percentage may be indicative of weightage given to the time period in each query fragment. In some embodiments, both trajectory percentage and weightage percentage may be applied to each data fragment.

Each of the plurality of data fragments after being processed may encapsulate information extracted from the second database, such as historical sales data for specific products during different seasons. Each of the plurality of data fragments, after being processed, may include data corresponding to a time frame indicating a period to which the data pertains, a weightage percentage representing a significance of the data, and a trajectory percentage indicating trend or directionality of the data over time.

At step 435, each of the processed plurality of data fragments may be combined or aggregated to generate a seasonally adjusted response. In some embodiment, the seasonally adjusted response may be displayed to the user on the device associated with the user.

**FIG. 5** is a flowchart that depicts a method 500 of extracting parameters from an input, in accordance with an exemplary embodiment of the present disclosure. FIG. 5 is explained in conjunction with FIGs 1-4. The steps 505-515 may be performed by the processor prior to the step of 305 or step 405 described with reference to FIGs. 3 and 4, respectively.

At step 505, an input may be received by a processor (such as the processor 205) from a device (for example, a device from the plurality of device(s) 110) associated with a user. Further, at step 510, the input may be pre-processed by the processor using an NLP model. For example, the input may be in a form of text, voice, or any other mode of communication. The input may be a query. By way of an example, the input may be "What will the sales volume for mobile phones be for the three weeks leading to Easter 2024 in France?".

As will be appreciated to a person skilled in the art, the NLP model facilitates interaction between computers and humans through natural language. The input may be pre-processed through the NLP model to understand underlying meaning of the input. In some embodiments, the NLP model may analyze and interpret the input text to extract its meaning, structure, and context. In some embodiments, the pre-processing may include tokenization (breaking the text into words or phrases), part-of-speech tagging (identifying grammatical components of each word), entity recognition (identifying named entities such as locations, dates, or organizations), and syntactic parsing (analyzing grammatical structure of sentences).

Thereafter, at step 515, a set of parameters may be extracted by the processor based on the pre-processing. The set of parameters may include a timeframe, a locale, and a dimension associated with the input received from the device associated with the user. The set of parameters may include information such as a timeframe, a locale, and a dimension. The timeframe may specify a period of time relevant to the user query. The timeframe may indicate a specific date range, a duration, or a point in time. The timeframe for the example input mentioned above may be "three weeks leading to Easter 2024". The locale may indicate a geographic location associated with the user query. For example, the locale may be a city, a region, a country, or any other geographical reference point. The locale for the example input mentioned above may be "France." The dimension may be the scope of the query. For example, the dimension in the above-stated example may be "sales volume for mobile phones." Other examples of dimension may be, revenues, margins, attendance in an organization, conversions, CPU utilization, and the like.

**FIGS. 6** illustrates an exemplary scenario 600 for generating seasonally adjusted responses in real time, in accordance with an exemplary embodiment of the present disclosure. FIG. 6 is explained in conjunction with FIGs. 1 - 5. As illustrated in FIG. 6, the exemplary scenario 600 may include a user 605, a mobile device 610 (i.e., a device associated with a user) associated with the user 605, a server 615 (such as the server 105) including a first database 620 and a machine learning (ML) model 630, a communication network 625 (same as the communication network 115), and a second database 635. The server 615 may exchange data with the mobile device 610 and the second database 635 via the communication network 625.

In some embodiments, the user 605 may provide an input to the mobile device 610 through a user interface of the mobile device 610. The input may be a user query. Further, the input may be transmitted to the server 615 by the mobile device 610 via the communication network 625. In other words, a processor (such as the processor 205) of the server 615 may receive the input from the mobile device 610 associated with the user 605. The input may be optionally pre-processed by the processor using an NLP model. Further, in some embodiments, the processor may extract a set of parameters from the input. In some embodiments, the pre-processing may be executed on the mobile device 610 or any other computing device. The set of parameters may include a timeframe, a locale, and a dimension associated with the input received from the mobile device 610 associated with the user 605. In some embodiments, the user 605 may provide the set of parameters to the server 615 via the mobile device 610.

Further, the processor may query the first database 620 based on the set of parameters. The first database 620 may be a synthetic calendar database. The first database 620 may be generated using the ML model 630. The processor may retrieve a plurality of query fragments related to the set of parameters from the first database 620.

In case of failure of querying the first database 620, the server 615 may send a notification to the mobile device 610 associated with the user 605 about the failure via the communication network 625. In such a case, the user 605 may provide feedback to the mobile device 610 which may be further transmitted to the server 615 via the communication network 625. Further, the feedback may be used to train the ML model 630. The ML model 630 may further update the first database 620 based on the user feedback.

Further, the second database 635 may be queried using the plurality of query fragments to generate a seasonally adjusted response. The second database 635 may be a system of record (SOR) database. The second database 635 may be located within another server that may be in communication with the server 615. For example, after retrieval of the plurality of query fragments, the second database 635 may be queried by the processor of the server 615 via the communication network 625. In response to querying the second database 635, the processor of the server 615 may generate a plurality of data fragments. Further, each of the plurality of data fragments may be processed individually and then combined to generate the seasonally adjusted response.

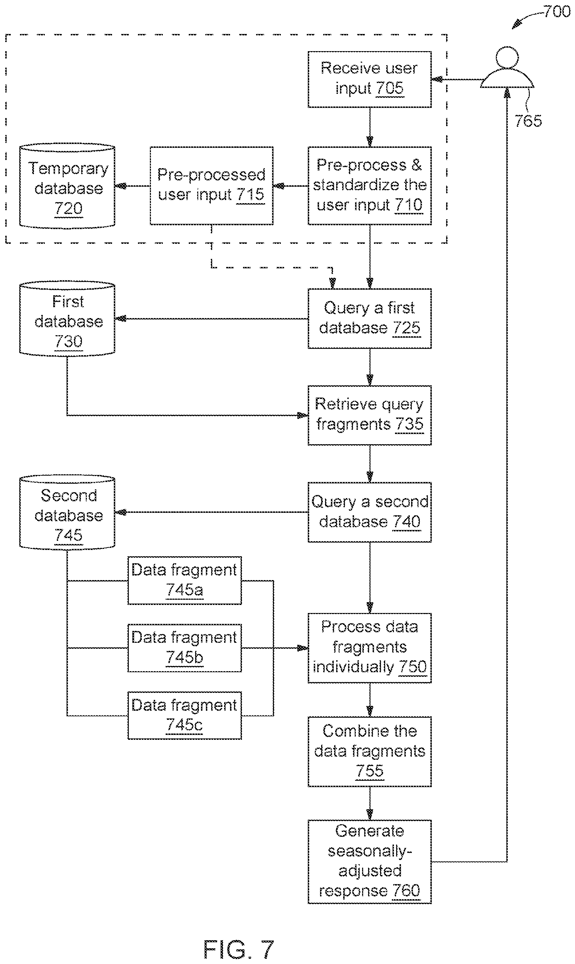

**FIG. 7** illustrates a control logic 700 for generating seasonally adjusted responses in real time, in accordance with an exemplary embodiment of the present disclosure. FIG. 7 is explained in conjunction with FIGs. 1-6.

At step 705, a user input may be received from a user 765. For example, the user input may be "What will be the sales revenue for product A in March 2024 in UK ?" At step 710, the user input may be pre-processed using an NLP model. For example, a pre-processed user input 715 may include a set of parameters including a locale "UK", a timeframe "March 2024", and a dimension "sales revenue for Product A". The pre-processed user input 715 may be further stored in a temporary database 720. Steps 705-710 correspond to pre-processing of the user input. In some embodiment, the user 765 may directly provide the set of parameters and the NLP model may not be required in such a case. For example, the user 765 may be directly provide the set of parameters "UK", "March 2024", and "sales revenue for Product A " as input.

Thereafter, at step 725, a first database 730 may be queried based on the set of parameters. The first database 730 may be a synthetic calendar database. In response to querying the first database 730, at step 735, a plurality of query fragments may be retrieved from the first database 730.

At step 740, a second database 745 may be queried. The second database 745 may correspond to a system of record (SOR) database. Further, in some embodiments, in response to querying the second database 745, data fragments such as a data fragment 745a, a data fragment 745b, and a data fragment 745c, may be generated. Each of the data fragments 745a, 745b, and 745c may include a response queried from the second database for the locale and dimension mentioned in the query.

At step 750, the data fragments 745a, 745b, and 745c may be processed individually. In particular, a trajectory percentage and a weightage percentage may be applied to each data fragment. Further, at step 755, the processed data fragments 745a, 745b, and 745c may be combined by performing operations such as addition. At step 760, a seasonally adjusted response may be generated based on the combined data fragments. In some embodiments, the seasonally adjusted response may be presented to the user 765.

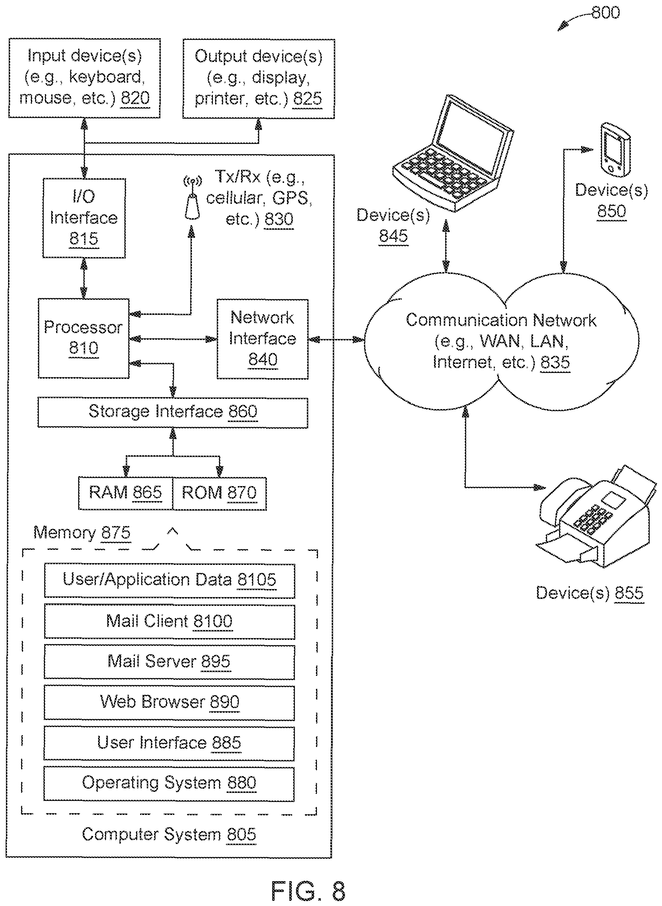

The disclosed methods and systems may be implemented on a conventional or a general-purpose computer system, such as a personal computer (PC) or server computer. **FIG. 8** is a block diagram that illustrates a system architecture 800 of a computer system 805 for generating seasonally adjusted responses in real time, in accordance with an exemplary embodiment of the present disclosure. Variations of the computer system 805 may be used for implementing server for generating seasonally adjusted responses. The computer system 805 may include a central processing unit ("CPU" or "processor") 810. The processor 810 may include at least one data processor for executing program components for executing user-generated or system-generated requests. A user may include a person, a person using a device such as such as those included in this disclosure, or such a device itself. The processor 810 may include specialized processing units such as integrated system (bus) controllers, memory management control units, floating point units, graphics processing units, digital signal processing units, etc. The processor 810 may include a microprocessor, such as AMD^{®} ATHLON^{®}, DURON^{®} OR OPTERON^{®}, ARM's application, embedded or secure processors, IBM^{®} POWERPC^{®}, INTEL^{®} CORE^{®} processor, ITANIUM^{®} processor, XEON^{®} processor, CELERON^{®} processor, Graphic Processing Units (GPUs) such as GPUs from Nvidia^{®}, Intel ^{®}, AMD^{®}, etc. or other line of processors, etc. The processor 810 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

The processor 810 may be disposed in communication with one or more input/output (I/O) devices via an I/O interface 815. The I/O interface 815 may employ communication protocols/methods such as, without limitation, audio, analog, digital, monoaural, RCA, stereo, IEEE-1394, near field communication (NFC), FireWire, Camera Link^{®}, GigE, serial bus, universal serial bus (USB), infrared, PS/2, BNC, coaxial, component, composite, digital visual interface (DVI), high-definition multimedia interface (HDMI), radio frequency (RF) antennas, S-Video, video graphics array (VGA), IEEE 802.n /b/g/n/x, Bluetooth, cellular (e.g., code-division multiple access (CDMA), high-speed packet access (HSPA+), global system for mobile communications (GSM), long-term evolution (LTE), WiMAX, or the like), etc.

Using the I/O interface 815, the computer system 805 may communicate with one or more I/O devices. For example, an input device 820 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, altimeter, gyroscope, proximity sensor, or the like), stylus, scanner, storage device, transceiver, video device/source, visors, etc. Further, an output device 825 may be a printer, fax machine, video display (e.g., cathode ray tube (CRT), liquid crystal display (LCD), light-emitting diode (LED), plasma, or the like), audio speaker, etc. In some embodiments, a transceiver 830 may be disposed in connection with the processor 810. The transceiver 830 may facilitate several types of wireless transmission or reception. For example, the transceiver 830 may include an antenna operatively connected to a transceiver chip (e.g., TEXAS INSTRUMENTS^{®} WILINK WL1286^{®}, BROADCOM^{®} BCM4550IUB8^{®}, INFINEON TECHNOLOGIES^{®} X-GOLD 1436-PMB9800^{®} transceiver, or the like), providing IEEE 802.11a/b/g/n, Bluetooth, FM, global positioning system (GPS), 2G/3G HSDPA/HSUPA communications, etc.

In some embodiments, the processor 810 may be disposed in communication with a communication network 835 via a network interface 840. The network interface 840 may communicate with the communication network 835. The network interface 840 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 835 may include, without limitation, a direct interconnection, local area network (LAN), wide area network (WAN), wireless network (e.g., using Wireless Application Protocol), the Internet, etc. Using the network interface 840 and the communication network 835, the computer system 805 may communicate with devices 845, 850, and 855. These devices 845, 850, and 855 may include, without limitation, personal computer(s), server(s), fax machines, printers, scanners, various mobile devices such as cellular telephones, smartphones (e.g., APPLE^{®} IPHONE^{®}, BLACKBERRY^{®} smartphone, ANDROID^{®} based phones, etc.), tablet computers, eBook readers (AMAZON^{®} KINDLE^{®}, NOOK^{®} etc.), laptop computers, notebooks, gaming consoles (MICROSOFT^{®} XBOX^{®}, NINTENDO^{®} DS^{®}, SONY^{®} PLAYSTATION^{®}, etc.), or the like. In some embodiments, the computer system 805 may itself embody one or more of these devices.

In some embodiments, the processor 810 may be disposed in communication with memory 875 (e.g., a Random Access Memory (RAM) 865, a Read-Only Memory (ROM) 870, etc.) via a storage interface 860. The storage interface 860 may connect to the memory 875 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), STD Bus, RS-232, RS-422, RS-485, I2C, SPI, Microwire, 1-Wire, IEEE 1284, Intel^{®} QuickPathInterconnect, InfiniBand, PCIe, etc. The memory drives may further include a drum, magnetic disc drive, magneto-optical drive, optical drive, redundant array of independent discs (RAID), solid-state memory devices, solid-state drives, etc.

The memory 875 may store a collection of program or database components, including, without limitation, an operating system 880, a user interface 885, a web browser 890, a mail server 895, a mail client 8100, user/application data 8105 (e.g., any data variables or data records discussed in this disclosure), etc. The operating system 880 may facilitate resource management and operation of the computer system 805. Examples of operating systems include, without limitation, APPLE^{®} MACINTOSH^{®} OS X, UNIX, Unix-like system distributions (e.g., Berkeley Software Distribution (BSD), FreeBSD, NetBSD, OpenBSD, etc.), Linux distributions (e.g., RED HAT^{®}, UBUNTU^{®}, KUBUNTU^{®}, etc.), IBM^{®} OS/2, MICROSOFT^{®} WINDOWS^{®} (XP^{®}, Vista^{®}/7/8/10/11, etc.), APPLE^{®} IOS^{®}, GOOGLE^{®} ANDROID^{®}, BLACKBERRY^{®} OS, or the like. The user interface 885 may facilitate display, execution, interaction, manipulation, or operation of program components through textual or graphical facilities. For example, user interfaces may provide computer interaction interface elements on a display system operatively connected to the computer system 805, such as cursors, icons, check boxes, menus, scrollers, windows, widgets, etc. Graphical user interfaces (GUIs) may be employed, including, without limitation, APPLE^{®} MACINTOSH^{®} operating systems' AQUA^{®} platform, IBM^{®} OS/2^{®}, MICROSOFT^{®} WINDOWS^{®} (e.g., AERO^{®}, METRO^{®}, etc.), UNIX X-WINDOWS, web interface libraries (e.g., ACTIVEX^{®}, JAVA^{®}, JAVASCRIPT^{®}, AJAX^{®}, HTML, ADOBE^{®} FLASH^{®}, etc.), or the like.

In some embodiments, the computer system 805 may implement a web browser 890 stored program component. The web browser 890 may be a hypertext viewing application, such as MICROSOFT^{®} INTERNET EXPLORER^{®}, GOOGLE^{®} CHROME^{®}, MOZILLA^{®} FIREFOX^{®}, APPLE^{®} SAFARI^{®}, etc. Secure web browsing may be provided using HTTPS (secure hypertext transport protocol), secure sockets layer (SSL), Transport Layer Security (TLS), etc. Web browsers may utilize facilities such as AJAX^{®}, DHTML, ADOBE^{®} FLASH^{®}, JAVASCRIPT^{®}, JAVA^{®}, application programming interfaces (APIs), etc. In some embodiments, the computer system 805 may implement a mail server stored program component. The mail server 895 may be an Internet mail server such as MICROSOFT^{®} EXCHANGE^{®}, or the like. The mail server 895 may utilize facilities such as ASP, ActiveX, ANSI C++/C#, MICROSOFT .NET^{®} CGI scripts, JAVA^{®}, JAVASCRIPT^{®}, PERL^{®}, PHP^{®}, PYTHON^{®}, WebObjects, etc. The mail server 895 may utilize communication protocols such as internet message access protocol (IMAP), messaging application programming interface (MAPI), MICROSOFT^{®} EXCHANGE^{®}, post office protocol (POP), simple mail transfer protocol (SMTP), or the like. In some embodiments, the computer system 805 may implement the mail client 8100 stored program component. The mail client 8100 may be a mail viewing application, such as APPLE MAIL^{®}, MICROSOFT ENTOURAGE^{®}, MICROSOFT OUTLOOK^{®}, MOZILLA THUNDERBIRD^{®}, etc.

In some embodiments, computer system 805 may store the user/application data 8105, such as the data, variables, records, etc. as described in this disclosure. Such databases may be implemented as fault-tolerant, relational, scalable, secure databases such as ORACLE^{®} OR SYBASE^{®} OR POSTGRESQL^{®} OR any such similar data. Alternatively, such databases may be implemented using standardized data structures, such as an array, hash, linked list, struct, structured text file (e.g., XML), table, or as object-oriented databases (e.g., using OBJECTSTORE^{®}, POET^{®}, ZOPE^{®}, etc.). Such databases may be consolidated or distributed, sometimes among the various computer systems discussed above in this disclosure. It is to be understood that the structure and operation of the any computer or database component may be combined, consolidated, or distributed in any working combination.

Thus, the present disclosure may overcome drawbacks of traditional systems as discussed before. The present disclosure offers several advantages. By leveraging a Machine Learning (ML) model to generate a synthetic calendar that closely mimics a "like-for-like" timeframe, the disclosure ensures accurate and seasonally adjusted responses in real-time. This allows for precise forecasting, crucial for decision-making in dynamic environments. Since the ML model may be trained to generate a database (i.e., the synthetic calendar database) based on numerous factors such as calendar types, global and localized events, demographic data, and changing trajectories, it provides comprehensive and granular insights into the underlying trends and patterns. This multi-dimensional approach enhances accuracy and reliability of projections, enabling stakeholders to make informed decisions. A second database may be queried using the query fragments for generation of data fragments. Processing each data fragment to reflect weightage of the time period and to normalize the data based on factors such as inflation or demographic changes, and then aggregating all the processed data fragments, contributes to generating a seasonally adjusted prediction which is accurate and reliable than the existing techniques of predictions.

Moreover, the disclosure can be utilized in real-time or asynchronously. This flexibility accommodates different operational needs and ensures adaptability to varying circumstances. Additionally, the disclosure provides an ability to dynamically update the synthetic calendar database using the ML model, ensuring continuous improvement and relevance, as it learns from new data and user feedback. This iterative process enhances performance over time, making it a valuable tool for forecasting and decision support across various industries and applications.

The present disclosure may have utility in various fields including services, utilities, resources, energy, retail, commerce, telecoms, media, insurance, automotive, financial services, travel, transportation, logistics, real estate, public & social sector, sports, mining, industrial, healthcare, education, and consumer packaged goods. With regards to technology and development, the disclosure holds significant value for website development, web application development, and software development. Each of the fields may benefit from website development, application development, quality assurance testing, control towers, dashboards, command centers, analytical platforms, forecasting tools, Generative AI platforms etc.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Although the present invention has been described in connection with some embodiments, it is not intended to be limited to the specific form set forth herein. Rather, the scope of the present invention is limited only by the claims. Additionally, although a feature may appear to be described in connection with particular embodiments, one skilled in the art would recognize that various features of the described embodiments may be combined in accordance with the invention.

Furthermore, although individually listed, a plurality of means, elements or process steps may be implemented by, for example, a single unit or processor. Additionally, although individual features may be included in different claims, these may be advantageously combined, and the inclusion in different claims does not imply that a combination of features is not feasible and/or advantageous. Also, the inclusion of a feature in one category of claims does not imply a limitation to this category, but rather the feature may be equally applicable to other claim categories, as appropriate.

## Claims

1. A method for generating seasonally adjusted responses in real time, the method comprising:
receiving, by a processor, a set of parameters from a device associated with a user;
querying, by the processor, a first database based on the set of parameters, wherein the first database is generated using a machine learning (ML) model;
retrieving, by the processor from the first database, a plurality of query fragments related to the set of parameters and a plurality of performance metrices corresponding to the plurality of query fragments; and
generating, by the processor, a seasonally adjusted response based on the plurality of query fragments and the plurality of performance metrices.

2. The method of claim 1, further comprising generating the first database, by the processor, using the ML model based on a plurality of calendars, global events, locale-specific events, locale-specific demographic data, and locale-specific trajectory changes, wherein the locale-specific events comprise locale-specific payroll data, locale-specific school calendar, locale-specific weather patterns, and locale-specific social, cultural, and religious events.

3. The method of claim 1, further comprising:
querying, by the processor, a second database using the plurality of query fragments;
in response to querying the second database, generating, by the processor, a plurality of data fragments;
processing, by the processor, each of the plurality of data fragments individually based on the plurality of performance metrices; and
combining, by the processor, each of the plurality of data fragments to generate the seasonally adjusted response.

4. The method of claim 1, wherein the plurality of performance metrices comprises a plurality of trajectory percentages and a plurality of weightage percentages.

5. The method of claim 3, wherein the plurality of performance metrices comprises a plurality of trajectory percentages, and wherein processing each of the plurality of data fragments individually based on the plurality of performance metrices further comprises:
for each of the plurality of data fragments, applying, by the processor, a trajectory percentage from the plurality of traj ectory percentages to a corresponding data fragment, wherein the trajectory percentage is indicative of a prediction of a pattern of change in a time frame.

6. The method of claim 3, wherein the plurality of performance metrices comprises a plurality of weightage percentages, and wherein processing each of the plurality of data fragments individually based on the plurality of performance metrices further comprises:
for each of the plurality of data fragments, applying, by the processor, a weightage percentage from the plurality of weightage percentages to a corresponding data fragment, wherein the weightage percentage is indicative of growth trends and significance of events.

7. The method of claim 3, wherein each query fragment comprises a time frame, and wherein each data fragment comprises a response queried from the second database for the time frame in the corresponding query fragment.

8. The method of claim 1, further comprising:
receiving, by the processor, an input from the device associated with the user;
pre-processing, by the processor, the input using a Natural Language Processing (NLP) model; and
extracting, by the processor, the set of parameters based on the pre-processing.

9. The method of claim 1, wherein the set of parameters comprises a timeframe, a locale, and a dimension associated with an input received from the device associated with the user.

10. The method of claim 1, wherein in case of failure of querying the first database, the method further comprises:
receiving, by the processor, feedback from the user; and
training, by the processor, the ML model based on the feedback.

11. A system for generating seasonally adjusted responses in real time, the system comprising:
a processor; and
a memory communicatively coupled to the processor, wherein the memory stores processor-executable instructions, which, on execution, cause the processor to perform the steps of the method according to any one of claims 1 to 10.
